# EUROPEAN PATENT APPLICATION

(11) **EP 0 833 009 A1**
(43) Date of publication of application: **01.04.1998**
(21) Application number: 97202706.4
(22) Date of filing: 03.09.1997
(51) Int. Cl.: E01C 9/00, E01C 5/22

(54) **Cover element for ground parts**

(30) Priority: 04.09.1996 NL 1003951
(71) Applicant: Fosch Creatlon B.V., 1704 SE Heerhugowaard (NL)
(72) Inventor: Schirris, Alphons Albertus, 1703 RB Heerhugowaard (NL)
(74) Representative: Jilderda, Anne Ayolt

(57) **Abstract**

A cover element (6) is described for covering ground parts. Such a cover element (6) comprises a basically flat element with an upper side and a side directed towards the ground. With this, the side of the element directed towards the ground is provided with a porous, yet solid substance-proof layer.

In addition, a working method for covering a ground part is described, including at least one cover element (6) according to the invention, which is placed onto the ground part to be covered.

## Description

The present invention concerns a cover element for covering ground parts, comprising a basically flat element with an upper side and a side directed towards the ground.

Such cover elements are generally known and commercially available. It primarily concerns tiles, wooden platforms, sleepers and other cover elements suitable for placement onto -a part of- the soil, for example in a garden. These cover elements are placed onto the soil, commonly adjacent to each other, in order to form, for example, a path or a patio.

The drawback of the common cover elements is, however, that, in due course, after they have been placed onto the soil, they allow weeds and other wild plants to grow upward along and in between the cover elements. Not only do these wild plants offer an unpleasant sight, in addition, they can only be removed with difficulty, due to the fact that residues of wild plants, e.g. the roots, remain behind between or beneath the cover elements.

The above-mentioned drawback can be avoided by covering the ground part to be covered by a so-called anti-root cloth before the cover elements are placed onto the soil, in order to basically prevent wild plants from growing beneath and along the cover elements. This working method is, however, laborious since the cloth is to be cut to size and, moreover, is often inadequate, especially in case of wooden platforms as cover elements. Since wooden platforms at the side directed towards the ground are commonly provided with connecting elements attached at a distance of each other at the underside of the cover element, the wooden platform, when placed onto the anti-root cloth, will merely make contact with a small surface and, as a result, the chance that the anti-root cloth becomes disconnected from the remaining part increases, thus its intended purpose becomes lost.

The present invention aims at preventing the above-mentioned drawbacks and to this end, provides a cover element referred to at the preamble, which is characterised in that the side of the element which is directed towards the ground part is provided with a porous, yet solid substance-proof layer. By providing the cover element with such a layer, it can be placed onto the soil without the additional activity of inserting the above-mentioned cloth being required, while the solid substance-proof characteristic of the layer already present prevents weeds and wild plants from growing upward from beneath the cover elements.

In principle, the porous, yet solid substance-proof layer can be attached to any cover element with the problem referred to above. When using wooden platforms as cover elements, the solid substance-proof layer can be attached directly to the underside of the upper side, applying connecting elements yet after this. The supplementary advantage of this is that the space between the upper slats of the wooden platform are directly sealed at the bottom, thus objects and dirt between the slats can be removed easily.

The porous, yet solid substance-proof layer may comprise either woven or non-woven material. Preferably, the porous, yet solid substance-proof layer is treated with a plant-growth controlling agent in order to control plant and root growth, if any. It is obvious that a layer treated with a plant-growth controlling agent also comprises the above-mentioned anti-root cloth.

In a special embodiment, the porous, yet solid substance-proof layer is attached at the side of the element directed towards the ground by applying a chemical compound. Such a chemical compound, may, for example, comprise a glue compound. In another advantageous embodiment, the porous, yet solid substance-proof layer is attached to the side of the element directed towards the ground by means of mechanical connection tools. Such mechanical connection tools comprise, for example, nails, pins or staples.

Finally, the present invention concerns a working method for covering a ground part, with at least one cover element placed onto the ground part to be covered. This working method is characterised in that the cover element comprises a cover element according to the present invention, as described above.

The present invention will be explained in more detail below by means of the drawing annexed in which:
- figure 1: shows a schematic view of an arrangement of a number of tile-shaped elements with a porous, yet solid substance-proof layer attached to the side directed towards the ground according to the present invention; and
- figure 2: shows a schematic view of a wooden platform with a porous, yet solid substance-proof layer at the side directed towards the ground according to the present invention.

The drawings are purely schematic and not drawn to scale. Particularly for purposes of clarity, some dimensions have been represented in a greatly exaggerated manner. Whenever possible, parts in the figures are indicated with the same reference number.

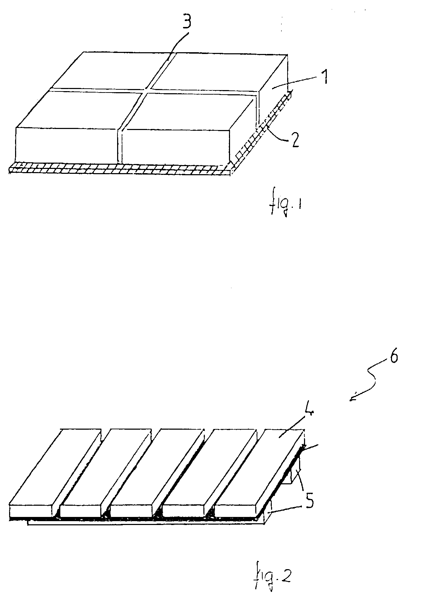

Figure 1 shows a schematic view of a group of four arranged tile-shaped elements 1 adjacent to each other, with grooves 3 in between elements 1. When placing the separate elements 1 onto a ground part, growth of weeds and wild plants between the elements in the grooves 3 may occur. In order to avoid this, the tile-shaped elements according to the design shown in figure 1 are provided with porous, yet solid substance-proof layer 2 attached to the side of the tile-shaped element directed towards the ground. Figure 1 shows the tile-shaped elements 1 being kept in the arranged position by means of layer 2 and thus the whole of the tile-shaped elements 1 can be placed as such onto a ground part. Another option would be to apply the connection elements to keep the tile-shaped elements 1 in the proper position in relation to each other. The growth of weeds or any other kind of wild plants in grooves 3 is avoided by means of the porous, yet solid substance-proof layer. This layer preferably comprises a material treated with a plant-growth controlling agent, e.g. an anti-root cloth. Since the layer has been attached directly to the underside of tile 1, the latter can be placed directly onto the soil, without requiring the additional activity of cutting the anti-root cloth to size, while layer 2 ensures that growth of weeds or wild plants in-between or next to the tiles is prevented as much as possible. To this end, layer 2 slightly protrudes tile-shaped elements 1, as is shown in figure 1.

Figure 2 shows a wooden platform 6 with a porous, yet solid substance-proof layer 2 attached to the side directed towards the ground of the wooden platform. The wooden platform 6 concerns a common wooden platform and comprises a number of slats 4 placed parallel to each other, which are kept in the proper position by means of connection elements 5 placed perpendicular to the direction of the slats. Layer 2 is located directly at the ground of slats 4, between slats 4 and connection elements 5. By connecting the layer to the working platform in this way, it is guaranteed that basically the entire surface of the working platform is protected from growth of weeds and wild plants. In addition to this, layer 2 serves as a kind of catch groove for easy removal of objects as well as dirt falling in between slats 4.

In case of both tiles and working platforms, layer 2 can be attached to the ground of the cover element by applying a chemical or glue compound; it is, however, also possible to apply mechanical connection tools, e.g. nails, pins, staples, etc.

Although the present invention has been explained in more detail by means of the optional embodiments referred to above, it may be obvious to people that the invention is by no means limited to these embodiments. In principle, the invention can be applied with any cover element with cracks, grooves, etc. allowing growth of weeds in, next to or along the cover element.

## Claims

1. Cover element for covering ground parts, comprising a basically flat element with an upper side and a side directed towards the ground, characterised in that the side of the element directed towards the ground is provided with a porous, yet solid substance-proof layer (2).

2. Cover element according to claim 1, characterised in that the porous, yet solid substance-proof layer (2) is treated with a plant-growth controlling agent.

3. Cover element according to claim 1 or 2, characterised in that the porous, yet solid substance-proof layer (2) has been attached to the side of the element directed towards the ground by applying a chemical compound.

4. Cover element according to claim 1 or 2 characterised in that the porous, yet substance-proof layer (2) has been attached to the side of the element directed towards the ground by applying mechanical connection elements.

5. Working method for covering a ground part, with at least one cover element placed onto the ground part to be covered, characterised in that the cover element comprises a cover element according to one or more of the claims 1-4.
